# FASCICULE DE BREVET EUROPEEN

(11) **EP 3 810 490 B1**
(45) Date de publication et mention de la délivrance du brevet: **13.09.2023**
(21) Numéro de dépôt: 19742643.0
(22) Date de dépôt: 17.06.2019
(51) Int. Cl.: B62D 21/15, B62D 25/20

(54) **CHASSIS DE VEHICULE AUTOMOBILE, COMPRENANT UN MOYEN DE REPARTITION CONTRE UN TUNNEL D'UN EFFORT APPLIQUE PAR UNE TRAVERSE EN CAS DE CHOC LATERAL**
KRAFTFAHRZEUGCHASSIS MIT VORRICHTUNG ZUR VERTEILUNG EINER VON EINEM QUERTRÄGER ANGEWANDTEN KRAFT GEGEN EINEN TUNNEL IM FALLE EINES SEITENAUFPRALLS
MOTOR VEHICLE CHASSIS, COMPRISING MEANS FOR DISTRIBUTING AGAINST A TUNNEL A FORCE APPLIED BY A CROSSMEMBER IN THE EVENT OF A SIDE IMPACT

(30) Priorité: 19.06.2018 FR 1855376
(43) Date de publication de la demande: 28.04.2021
(73) Titulaire: PSA Automobiles SA, 78300 Poissy (FR)
(72) Inventeur: THOR, Tou, 25150 PONT DE ROIDE VERMONDANS (FR); FONFREDE, Stéphane, 90000 BELFORT (FR)
(86) Numéro de dépôt international: PCT/FR2019/051467
(87) Numéro de publication internationale: WO 2019/243723

(56) Documents cités:
- DE-A1- 19 627 610
- DE-A1-102014 006 718
- DE-C2- 19 627 610
- GB-A- 2 490 392
- US-B1- 8 602 454

## Description

La présente invention relève du domaine des châssis de véhicules automobiles et plus particulièrement des modalités de leur déformation sous l'effet d'un choc latéral auquel un tel châssis est potentiellement soumis. L'invention concerne plus spécifiquement un aménagement de la jonction entre une traverse et un tunnel constitutifs du châssis, permettant de limiter les déformations du châssis lorsqu'il est soumis à un choc latéral.

Les véhicules automobiles comprennent classiquement un châssis roulant qui forme une armature de soubassement du véhicule couverte par un plancher de circulation des passagers à l'intérieur de l'habitacle du véhicule. Ladite armature est essentiellement constituée de longerons entretoisés par des traverses, dont des longerons latéraux, et comprend couramment au moins un tunnel longitudinal qui est interposé à distance transversale entre les longerons latéraux. Un tel tunnel est alors potentiellement relié au moins à l'un des longerons latéraux via au moins une traverse, tel que notamment au moins une traverse d'assise soutenant au moins un siège pour les passagers du véhicule.

Dans ce contexte, le châssis comporte des aménagements pour protéger les passagers en cas de choc latéral auquel le véhicule peut être soumis. De tels aménagements visent essentiellement à contrôler les modalités de déformation des éléments de carrosserie constitutifs du châssis, pour limiter sa déformation et celle du plancher lorsque le châssis supporte le choc.

Dans le cadre de l'invention, il est plus spécifiquement considéré une déformation d'un dit tunnel en cas d'un choc latéral supporté par le châssis, notamment lorsque le véhicule subit un accident contre un obstacle à sa progression, qui heurte l'un des longerons latéraux dans sa zone de jonction avec une traverse reliée au tunnel.

En cas de choc latéral appliqué contre le châssis, le choc est générateur d'un effort de poussée contre l'extrémité de la traverse fixée au longeron latéral. L'effort de poussée est alors transmis au tunnel par la traverse, ce qui induit un risque significatif de détérioration du tunnel et donc du plancher, et par suite un risque d'atteinte à la sécurité des passagers.

Il est connu de conformer la traverse de manière à ce qu'elle épouse le profil du tunnel, tel qu'il ressort du document DE 19 627 610 (DAIMLER BENZ AG) et du document FR 3 023 251 (PEUGEOT CITROEN AUTOMOBILES). En cas de choc, le plancher en est renforcé et une rupture localisée de la traverse est favorisée. Ceci permet d'éviter une détérioration du tunnel et une intrusion de la traverse vers l'habitacle du véhicule.

Dans ce contexte, la présente invention a pour objet un châssis de véhicule automobile comprenant une armature de soubassement couverte par un plancher fixé sur l'armature. L'armature de soubassement comprend au moins une traverse s'étendant transversalement en interposition entre un longeron latéral et un tunnel longitudinal.

L'objectif de l'invention est d'améliorer la sécurité du véhicule en cas de choc latéral appliqué contre le châssis afin de protéger les passagers.

Il est plus spécifiquement visé par l'invention de limiter dans ce cas une dégradation du tunnel, notamment en ce qui concerne son maintien en conformation et/ou sa fixation au plancher, pour finalement préserver le plancher d'une déformation susceptible de porter atteinte à la sécurité des passagers.

Un autre but de l'invention est de parvenir à l'objectif visé en prenant en compte diverses contraintes susceptibles de rendre rédhibitoires une solution potentielle. De telles contraintes comprennent typiquement au moins les contraintes suivantes :
-) une limitation d'un accroissement de la masse du véhicule, et/ou
-) une limitation du coût d'obtention du véhicule dans le contexte d'une concurrence économique notoirement sévère dans le domaine automobile. Il est notamment visé une solution qui soit structurellement simple et/ou qui évite de complexifier les modalités d'assemblage et/ou de montage sur le châssis des organes qu'elle met en oeuvre.

Les buts visés par la présente invention sont atteints par application des dispositions qui suivent.

Il est si besoin précisé certaines notions relatives et/ou termes qui sont communément admis dans le domaine automobile pour décrire un véhicule, ainsi que le châssis qu'il comprend et/ou ses composants.

Les directions d'extension d'un véhicule sont communément définies dans un repère orthonormé identifié suivant une direction longitudinale, une direction transversale et une direction verticale. Dans le contexte de l'invention, de telles directions et les notions relatives afférentes sont appliquées au châssis et/ou à ses composants considérés individuellement ou relativement les uns par rapport aux autres, sauf précision contraire mentionnée.

La notion longitudinal est considérée entre l'avant et l'arrière du véhicule par rapport à la station du conducteur qui fait face à la direction d'avancement du véhicule vers l'avant. Les termes longerons et tunnel désignent des éléments de carrosserie s'étendant principalement longitudinalement, un tunnel s'étendant à distance transversale en interposition entre des longerons.

La notion transversal est typiquement considérée suivant une direction d'extension du véhicule entre ses côtés latéraux droit et gauche considérés par rapport à la station du conducteur en position de conduite du véhicule. Le terme traverse désigne typiquement un élément de carrosserie s'étendant principalement transversalement.

La notion vertical est considérée suivant une direction en élévation du véhicule par rapport à son plan de roulage au sol. Par suite, les notions inférieur et supérieur, ou autres notions apparentées comme par exemple sous et/ou dessous ainsi que sur et/ou dessus, sont des notions relatives considérées au regard de la notion de verticalité par rapport au plan de roulage du châssis au sol.

A titre indicatif non restrictif pour apprécier les résultats techniques obtenus par l'invention, il est pris en compte un choc latéral appliqué contre le châssis par un obstacle à la progression du véhicule dans une zone de jonction entre la traverse et le longeron latéral que comprend le châssis. Il est notamment considéré une orientation relative entre la direction longitudinale d'extension du châssis et la direction d'application dudit choc contre le châssis qui est comprise entre environ 70° (soixante dix degrés) et 80°, etune amplitude du choc latéral qui est appliqué contre le châssis en tenant compte d'une progression du véhicule comprise entre environ 30 km/h (trente kilomètres par heure) et 35 km/h.

Un châssis de véhicule automobile conforme à l'invention, comprend une armature de soubassement couverte par un plancher fixé sur l'armature. L'armature comprend des longerons latéraux, au moins un tunnel longitudinal placé à distance transversale d'un dit longeron auquel le tunnel est relié via une traverse fixée à l'une de ses extrémités au tunnel et à l'autre de ses extrémités au longeron. La traverse forme un premier organe de transmission au tunnel d'un premier effort de poussée généré par un choc appliqué latéralement contre le châssis, notamment dans la zone de jonction entre la traverse et le longeron.

Dans ce contexte, l'invention est reconnaissable en ce qu'au moins une jambe de force est conjointement fixée à ses extrémités respectives à la traverse et au tunnel, en étant inclinée par rapport à leur direction principale d'extension dans un plan parallèle au plancher. La jambe de force forme un deuxième organe de transmission au tunnel d'un deuxième effort de poussée généré par ledit choc et transmis à la jambe de force par la traverse.

Il est compris ici que la notion de jambe de force désigne un élément de carrosserie robuste qui est allongé suivant une direction principale d'extension entre ses extrémités.

Autrement dit selon l'invention, le châssis est pourvu d'un moyen de répartition d'efforts via lequel un effort global de poussée généré par le dit choc et transmis à la traverse par le longeron, est réparti en au moins deux efforts élémentaires de poussée appliqués contre le tunnel et comprenant ledit premier effort de poussée et ledit deuxième effort de poussée. Ledit moyen de répartition d'effort comprend d'une part la jambe de force qui transmet le deuxième effort de poussée au tunnel, et d'autre part la partie de la traverse s'étendant entre l'extrémité de la jambe de force fixée à la traverse et l'extrémité de la traverse fixée au tunnel, via laquelle le premier effort de poussée est transmis au tunnel.

Il en résulte une mise sous contrainte du tunnel par lesdits efforts élémentaires de poussée en deux points de mise sous contrainte qui sont longitudinalement distants en étant respectivement localisés aux zones de jonction au tunnel des extrémités respectivement de la traverse et de la jambe de force.

La répartition de l'application de l'effort global de poussée contre le tunnel en deux points de mise sous contrainte longitudinalement distants :
-) limite l'amplitude des contraintes localement supportées par le tunnel et générées respectivement par le premier effort de poussée et par le deuxième effort de poussée,
-) procure une stabilisation du tunnel à l'encontre de sa déformation dans sa partie d'extension entre lesdits deux dits points de mise sous contrainte du tunnel, ce qui finalement permet de contenir une déformation significative du tunnel, et/ou
-) préserve le tunnel d'une dégradation susceptible de provoquer une rupture de sa fixation au plancher, ce qui finalement conforte un maintien de la rigidification du plancher procurée par le tunnel et évite une déformation significative du plancher susceptible de porter atteinte à la sécurité des passagers.

Selon une approche spécifique de l'invention, le châssis comprend une structure triangulée composée :
-) de la jambe de force,
-) d'une partie de la traverse s'étendant entre sa zone de jonction à la jambe de force et son extrémité jointe au tunnel, et
-) d'une partie du tunnel s'étendant entre l'extrémité de la traverse via laquelle la traverse est fixée au tunnel et une extrémité de la jambe de force fixée au tunnel et qui est opposée à son autre extrémité fixée à la traverse.

Selon une forme de réalisation dans un plan parallèle au plancher, la jambe de force est inclinée par rapport à la traverse d'un premier angle compris entre 30° et 60° et par rapport au tunnel d'un deuième angle compris entre 100° et 130°.

Selon une forme de réalisation dans un plan parallèle au plancher, la jambe de force est unique en étant inclinée depuis la traverse vers l'arrière du châssis. Il n'est cependant pas à exclure une forme de réalisation selon laquelle deux jambes de force sont réparties de part et d'autre de la traverse.

Les modalités particulières d'inclinaison de la jambe de force qui viennent d'être mentionnées, sont notamment choisies en corrélation avec les modalités d'application du choc latéral contre le châssis qui ont été précédemment mentionnées, en tenant compte des dimensions d'extension de la jambe de force et de la traverse, ainsi que la position de la zone de jonction entre la jambe de force et la traverse.

Il est notamment pris en compte une composante longitudinale de poussée développée vers l'arrière du châssis et générée par l'effort global de poussée appliqué contre le châssis sous l'effet du choc, de sorte que :
-) la jambe de force forme un organe d'absorption de l'énergie développée par ladite composante longitudinale de poussée, et/ou
-) les modalités de fixation et/ou l'agencement de la jambe de force au tunnel puissent être aisément organisées pour renvoyer ladite composante longitudinale de poussée perpendiculairement au tunnel suivant l'orientation du deuxième effort de poussée, ce qui permet de préserver le tunnel de ladite composante longitudinale de poussée.

Selon l'invention la jambe de force comporte un organe de renvoi du deuxième effort de poussée depuis une première direction de transmission du deuxième effort de poussée par la traverse à la jambe de force qui est orientée suivant l'extension principale de la jambe de force entre ses extrémités, vers une deuxième direction de transmission du deuxième effort de poussée par la jambe de force au tunnel qui est orientée perpendiculairement au tunnel.

Selon une forme de réalisation, l'organe de renvoi est formé d'un coude ménagé à l'extrémité de la jambe de force qui est fixée au tunnel. Le coude est orienté perpendiculairement au tunnel dans un plan parallèle au plancher.

Selon une forme de réalisation, la jambe de force comporte au moins un relief de renfort essentiellement ménagé suivant l'extension principale de la jambe de force entre ses extrémités. Un tel relief de renfort est par exemple configuré en nervure et/ou en bossage en étant issu de la matière constitutive de la jambe de force, en étant par exemple formé par emboutissage ou par moulage.

Selon une forme de réalisation la jambe de force est notamment configurée en un profilé mis en forme par emboutissage.

Selon une forme de réalisation, la traverse est une traverse d'assise dédiée au soutien d'au moins un siège du véhicule fixé à la traverse. Plus spécifiquement, la traverse est une traverse d'assise avant dédiée au soutien d'au moins un siège avant du véhicule.

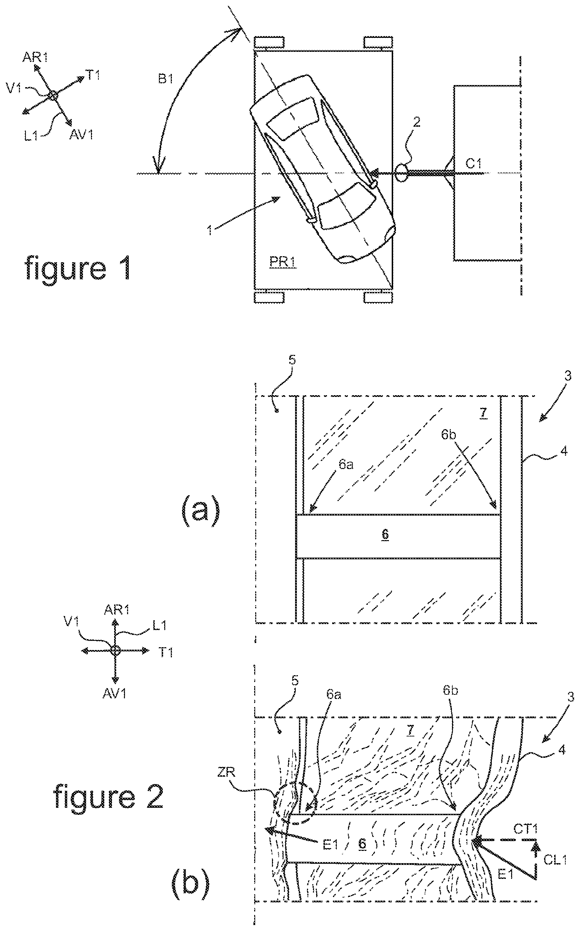

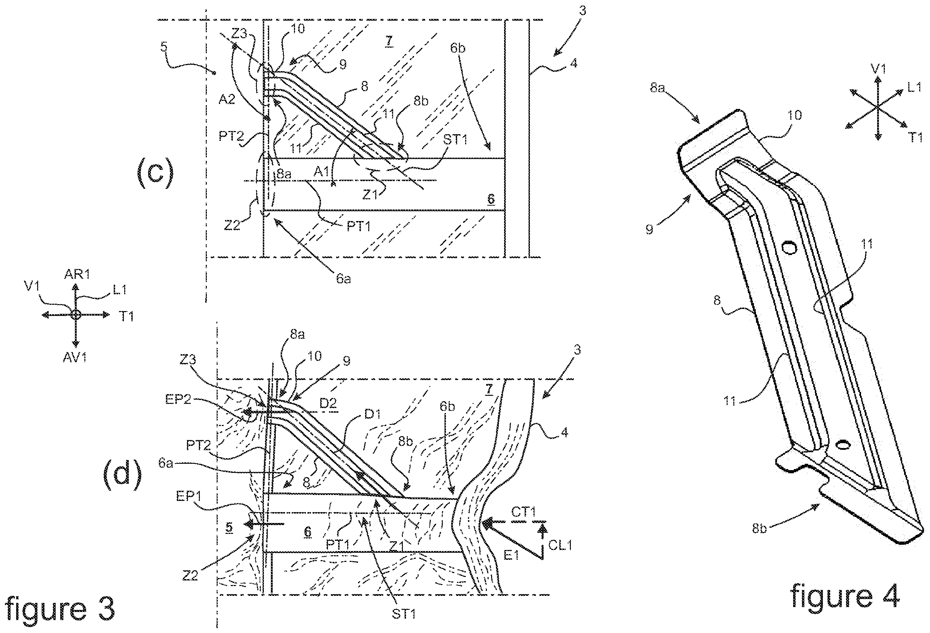

Un exemple de réalisation de la présente invention va être décrit en relation avec les figures des planches annexées, dans lesquelles :
-) la figure 1 est une illustration présentant, à titre indicatif non limitatif, un contexte d'un choc latéral provoqué contre un châssis d'un véhicule automobile, dans lequel contexte l'invention est notamment prévue d'être appliquée.
-) la figure 2 est composée de deux schémas (a) et (b) illustrant des modalités classiques de déformation du châssis dans le contexte représenté sur la figure 1, étant compris que sur les schémas de cette figure 2 l'invention est exclue.
-) la figure 3 est composée de deux schémas (c) et (d) illustrant un exemple de réalisation de l'invention, et des modalités de déformation du châssis du véhicule dans le contexte représenté sur la figure 1.
-) la figure 4 est une représentation en perspective de dessus d'un exemple de réalisation d'une jambe de force participante de l'invention.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

Sur la figure 1, un véhicule 1 automobile s'étend suivant les trois directions d'un repère orthonormé, comprenant typiquement une direction longitudinale L1 d'extension du véhicule 1 entre l'arrière AR1 et l'avant AV1 du véhicule 1, une direction transversale T1 d'extension du véhicule 1 entre ses côtés latéraux et une direction verticale V1 d'extension du véhicule 1 en élévation par rapport à son plan de roulage PR1 au sol.

Sur cette figure, il est illustré des conditions d'application en atelier d'essai d'un choc C1 latéral contre le châssis du véhicule 1. Selon un protocole de test, il est simulé un choc C1 appliqué par un poteau 2 contre le soubassement du véhicule 1 et donc contre son châssis.

Le choc C1 est appliqué contre le châssis pour une vitesse de progression du véhicule de 32 km/h. Le véhicule 1 est orienté suivant sa direction longitudinale L1 selon un angle B1 d'inclinaison de 75° par rapport à la direction d'application du choc C1, dans une zone de jonction entre un longeron latéral et une traverse que comprend le châssis.

Sur les schémas (a) et (b) de la figure 2 et sur les schémas (c) et (d) de la figure 3, le châssis 3 d'un véhicule 1 automobile ménage un soubassement comprenant des longerons 4 latéraux, un seul d'entre eux étant représenté dans le contexte illustré sur la figure 1 d'application du choc C1 contre le châssis 3. Le châssis 3 comprend aussi un tunnel 5 longitudinal L1 placé à distance transversale T1 du longeron 4. Un plancher 7 globalement plan L1/T1 orienté parallèlement au plan de roulage PR1 du véhicule et par exemple formé d'au moins un panneau de tôle, est fixé sur le soubassement.

Une traverse 6 relie entre eux le tunnel 5 et le longeron 4 à ses extrémités respectives 6a, 6b. Une première extrémité 6a de la traverse 6 est fixée au tunnel 5 et une deuxième extrémité 6b de la traverse 6 est fixée au longeron 4. La traverse 6 est notamment une traverse 6 d'assise dédiée au soutien d'au moins un siège avant pour les passagers avant du véhicule.

Sur les schémas (b) et (d), le choc C1 appliqué contre le châssis 3 dans le contexte illustré par la figure 1, est notamment appliqué latéralement contre le longeron 4 dans sa zone de jonction avec la traverse 6. Le choc C1 développe alors un effort global de poussée E1 contre le longeron 4. Par suite de l'inclinaison longitudinale du véhicule 1 par rapport à la direction d'application du choc C1 contre le longeron 4, ledit effort global de poussée E1 est générateur principalement d'une composante CT1 d'effort transversale, mais aussi d'une composante CL1 d'effort longitudinale, voire potentiellement aussi à moindres mesures d'une composante d'effort verticale.

L'effort global de poussée E1 provoque alors une déformation de la traverse 6. En outre, la traverse 6 transmet l'effort global de poussée E1 au tunnel 5 qui se déforme, ce qui entraîne une déformation du plancher 7.

Comme illustré sur le schéma (b) de la figure 2 relevant de l'art antérieur, le tunnel 5 et le plancher 7 se déforment significativement et il se présente un risque de rupture de la fixation entre le tunnel 5 et le plancher 7. Une telle rupture tend à se produire essentiellement en une zone ZR située à l'arrière de la traverse 6, notamment en raison de la transmission par la traverse 6 au tunnel 5 non seulement de ladite composante d'effort transversale CT1, mais aussi à moindres mesures de ladite composante d'effort longitudinale CL1.

Dans ce contexte sur la figure 3, l'invention propose de placer une jambe de force 8 en interposition entre la traverse 6 et le tunnel 5. Une telle jambe de force 8 est illustrée pour exemple plus en détail sur la figure 4. La jambe de force 8 est configurée et/ou aménagée sur le châssis 3 en participant avec la traverse 6 d'un moyen de répartition de l'effort global de poussée E1 contre le tunnel 5, en deux efforts élémentaires de poussée EP1 et EP2.

Une première extrémité 8a de la jambe de force 8 est fixée au tunnel 5 et une deuxième extrémité 8b de la jambe de force 8 est fixée à la traverse 6. En considérant un plan parallèle au plan L1/T1 du plancher 7, la jambe de force 8 est inclinée vers l'arrière du châssis 3 d'un premier angle A1 par rapport à la traverse 6 et d'un deuxième angle A2 par rapport au tunnel 5.

A titre indicatif, la valeur du premier angle A1 est comprise entre 30° et 60° et la valeur du deuxième angle A2 est compriseentre 100° et 130 °. Les valeurs respectives du premier angle A1 et du deuxième angle A2 sont notamment choisies en corrélation avec l'angle B1 d'inclinaison du châssis 3 dans le contexte illustré sur la figure 1, en tenant notamment compte de la dimension d'extension de la jambe de force 8 et de la position de sa fixation à la traverse 6.

Il en ressort que le châssis 3 comprend une structure triangulée ST1 composée :
-) de la jambe de force 8,
-) d'une partie PT1 de la traverse 6 s'étendant entre sa zone de jonction Z1 à la jambe de force 8 et sa zone de jonction Z2 au tunnel 5, et
-) d'une partie PT2 du tunnel 5 s'étendant entre sa zone de jonction Z2 à la traverse 6 et sa zone de jonction Z3 à la jambe de force 8.

Sur le schéma (d), la structure triangulée ST1 permet de répartir l'effort global de poussée E1 supporté par la traverse 6 suivant les deux dits efforts de poussée élémentaires EP1 et EP2. Plus particulièrement, l'effort global de poussée E1 supporté par la traverse 6 est réparti :
-) en un premier effort de poussée EP1 appliqué contre le tunnel 5 par la traverse 6 suivant son extension principale, et donc suivant la direction transversale T1, via la zone de jonction Z2 entre la traverse 6 et le tunnel 5, et
-) en un deuxième effort de poussée EP2 appliqué contre le tunnel 5 par la jambe de force 8 suivant la direction transversale T1, via leur zone de jonction Z3 l'un à l'autre. Le deuxième effort de poussée EP2 est issu de l'effort global de poussée E1 et est transmis à la jambe de force 8 par la traverse 6 via leur zone de jonction Z1 l'une à l'autre.

Il en ressort que le premier effort de poussée EP1 et le deuxième effort de poussée EP2 sont appliqués contre le tunnel 5 en deux points de mise sous contrainte du tunnel 5 qui sont longitudinalement distants l'un de l'autre, en étant respectivement localisés dans la zone de jonction Z2 entre la traverse 6 et le tunnel 5 et dans la zone de jonction Z3 entre la jambe de force 8 et le tunnel 5. Il en ressort qu'une déformation du tunnel 5 est efficacement contenue lorsque le châssis 3 est soumis au choc C1, essentiellement dans sa partie s'étendant entre sa zone de jonction Z2 à la traverse 6 et sa zone de jonction Z3 à la jambe de force 8. Une dégradation du tunnel est ainsi limitée et sa fixation au plancher 7 est préservée.

La jambe de force 8 étant inclinée dudit deuxième angle A2 par rapport au tunnel 5, la jambe de force 8 comporte un organe de renvoi 9 du deuxième effort de poussée EP2 depuis une première direction D1 de transmission du deuxième effort de poussée EP2 par la traverse 6 à la jambe de force 8, vers une deuxième direction D2 de transmission du deuxième effort de poussée EP2 au tunnel 5 par la jambe de force 8. Ladite première direction D1 est notamment orientée suivant l'extension principale de la jambe de force 8, et ladite deuxième direction D2 est notamment orientée perpendiculairement au tunnel 5 suivant son extension principale longitudinale L1, et donc suivant la direction transversale T1.

Selon l'exemple illustré, ledit organe de renvoi 9 est formé d'un coude 10 ménagé à la première extrémité 8a de la jambe de force 8 via laquelle la jambe de force 8 est fixée au tunnel 5. Un tel coude 10 permet d'orienter le deuxième effort de poussée EP2 depuis ladite première direction D1 vers ladite deuxième direction D2.

Par ailleurs, la jambe de force 8 comporte au moins un relief de renfort 11 ménagé suivant son extension et de préférence se prolongeant vers le coude 10. Le relief de renfort 11 procure une rigidification de la jambe de force 8 à l'encontre de sa déformation sous l'effet de l'application du deuxième effort de poussée EP2 au tunnel 5 par la jambe de force 8 et/ou de la transmission par la traverse 6 du deuxième effort de poussée EP2 à la jambe de force 8. La rigidification de la jambe de force 8 via ledit au moins un relief de renfort 11 qu'elle comporte, permet aussi de procurer un renfort supplémentaire au tunnel 5 à l'encontre de sa déformation.

## Revendications

1. Châssis (3) de véhicule (1) automobile, comprenant une armature de soubassement couverte par un plancher (7) fixé sur l'armature, l'armature comprenant des longerons (4) latéraux, au moins un tunnel (5) longitudinal placé à distance transversale d'un dit longeron (4) auquel le tunnel (5) est relié via une traverse (6) fixée à l'une de ses extrémités (6a) au tunnel (5) et à l'autre de ses extrémités (6b) au longeron (4), la traverse (6) formant un premier organe de transmission au tunnel (5) d'un premier effort de poussée (EP1) généré par un choc (C1) appliqué latéralement contre le châssis (3), au moins une jambe de force (8) étant conjointement fixée à ses extrémités (8a, 8b) respectives à la traverse (6) et au tunnel (5), en étant inclinée par rapport à leur direction principale d'extension dans un plan parallèle au plancher (7), ladite jambe de force (8) formant un deuxième organe de transmission au tunnel (5) d'un deuxième effort de poussée (EP2) généré par ledit choc (C1) et transmis à la jambe de force (8) par la traverse (6), **caractérisé en ce que** ladite jambe de force (8) comporte un organe de renvoi (9) du deuxième effort de poussée (EP2) depuis une première direction (D1) de transmission du deuxième effort de poussée (EP2) par la traverse (6) à la jambe de force (8) qui est orientée suivant l'extension principale de la jambe de force (8) entre ses extrémités (8a, 8b), vers une deuxième direction (D2) de transmission du deuxième effort de poussée (EP2) par la jambe de force (8) au tunnel (5) qui est orientée perpendiculairement au tunnel (5).

2. Châssis (3) selon la revendication 1, **caractérisé en ce que** le châssis (3) comprend une structure triangulée (ST1) composée :
-) de la jambe de force (8),
-) d'une partie de la traverse (6) s'étendant entre sa zone de jonction (Z1) à la jambe de force (8) et son extrémité (6a) jointe au tunnel (5), et
-) d'une partie du tunnel (5) s'étendant entre l'extrémité (6a) de la traverse (6) via laquelle la traverse (6) est fixée au tunnel (5), et une extrémité (8a) de la jambe de force (8) fixée au tunnel (5) et qui est opposée à son autre extrémité (8b) fixée à la traverse (6).

3. Châssis (3) selon l'une quelconque des revendications 1 et 2, **caractérisé en ce que** dans un plan parallèle au plancher (7), la jambe de force (8) est inclinée par rapport à la traverse (6) d'un premier angle (A1) compris entre 30° et 60° et par rapport au tunnel (5) d'un deuxième angle (A2) compris entre 100° et 130°.

4. Châssis (3) selon l'une quelconque des revendications 1 à 3, **caractérisé en ce que** dans un plan parallèle au plancher (7), la jambe de force (8) est unique en étant inclinée depuis la traverse (6) vers l'arrière (AR1) du châssis (3).

5. Châssis (3) selon l'une des revendications de 1 à 4, **caractérisé en ce que** l'organe de renvoi (9) est formé d'un coude (10) ménagé à l'extrémité de la jambe de force (8) qui est fixée au tunnel (5), le coude (10) étant orienté perpendiculairement au tunnel (5) dans un plan parallèle au plancher (7).

6. Châssis (3) selon l'une quelconque des revendications 1 à 5, **caractérisé en ce que** la jambe de force (8) comporte au moins un relief de renfort (11) essentiellement ménagé suivant l'extension principale de la jambe de force (8) entre ses extrémités (8a, 8b).

7. Châssis (3) selon l'une quelconque des revendications 1 à 6, **caractérisé en ce que** la jambe de force (8) est configurée en un profilé mis en forme par emboutissage.

8. Châssis (3) selon l'une quelconque des revendications 1 à 7, **caractérisé en ce que** la traverse (6) est une traverse d'assise dédiée au soutien d'au moins un siège du véhicule (1) fixé à la traverse (6).

9. Châssis (3) selon la revendication 9, **caractérisé en ce que** la traverse (6) est une traverse d'assise avant dédiée au soutien d'au moins un siège avant du véhicule (1).

## Patentansprüche

1. Fahrgestell (3) eines Kraftfahrzeugs (1) mit einem Untergestell, das von einem an dem Gestell befestigten Boden (7) abgedeckt ist, wobei das Gestell seitliche Längsträger (4) aufweist, wobei mindestens ein länglicher Tunnel (5) in einem transversalen Abstand von einem genannten Längsträger (4) angeordnet ist, mit dem der Tunnel (5) über eine Traverse (6) verbunden ist, die an einem Ende (6a) am Tunnel (5) und an dem anderen Ende (6b) am Längsträger (4) befestigt ist, wobei die Traverse (6) ein erstes Übertragungsorgan den Tunnel (5) eines ersten Schubkraft (EP1), die durch einen Aufprall (C1) erzeugt wird, der seitlich gegen den Rahmen (3) angelegt wird, wobei mindestens ein Stützfuß (8) an seinen jeweiligen Enden (8a, 8b) an dem Querträger (6) und dem Tunnel (5) gemeinsam befestigt ist, wobei er in Bezug auf ihre Haupterstreckungsrichtung in einer Ebene parallel zum Boden (7) geneigt ist, wobei der Stützfuß (8) ein zweites Übertragungsorgan für den Tunnel (5) einer zweiten Schubkraft (EP2) bildet, die durch den Aufprall (C1) erzeugt wird und durch den Querträger (6) auf den Stützfuß (8) übertragen wird, **dadurch gekennzeichnet, dass** Der Stützfuß (8) weist ein Umlenkorgan (9) der zweiten Schubkraft (EP2) aus einer ersten Übertragungsrichtung (D1) der zweiten Schubkraft (EP2) durch die Traverse (6) auf den Stützfuß (8) auf, das in der Haupterstreckung des Stützfußes (8) zwischen seinen Enden (8a, 8b) ausgerichtet ist, in eine zweite Übertragungsrichtung (D2) der zweiten Schubkraft (EP2) durch den Stützfuß (8) auf den Tunnel (5), die senkrecht zum Tunnel (5) ausgerichtet ist.

2. Rahmen (3) nach Anspruch 1, **dadurch gekennzeichnet, dass** der Rahmen (3) eine dreieckige Struktur (ST1) umfasst, die besteht aus:
- einem Stützbein (8),
- einem Teil des Querträgers (6), der sich zwischen seinem Verbindungsbereich (Z1) mit dem Stützbein (8) und seinem mit dem Tunnel (5) verbundenen Ende (6a) erstreckt, und
- einem Teil des Tunnels (5), der sich zwischen dem Ende (6a) des Querträgers (6), über das der Querträger (6) am Tunnel (5) befestigt ist, und einem Ende (8a) des Stützbeins (8) erstreckt, das am Tunnel (5) befestigt ist und das seinem anderen Ende (8b) gegenüberliegt, das am Querträger (6) befestigt ist.

3. Fahrgestell (3) nach einem der Ansprüche 1 und 2, **dadurch gekennzeichnet, dass** das Federbein (8) in einer Ebene parallel zum Boden (7) gegenüber dem Querträger (6) um einen ersten Winkel (A1) zwischen 30° und 60° und gegenüber dem Tunnel (5) um einen zweiten Winkel (A2) zwischen 100° und 130° geneigt ist.

4. Rahmen (3) nach einem der Ansprüche 1 bis 3, **dadurch gekennzeichnet, dass** in einer Ebene parallel zum Boden (7) das Stützbein (8) einzigartig ist, indem es von der Traverse (6) nach hinten (AR1) des Rahmens (3) geneigt ist.

5. Fahrgestell (3) nach einem der Ansprüche 1 bis 4, **dadurch gekennzeichnet, dass** das Umlenkorgan (9) durch eine am am Tunnel (5) befestigten Ende des Stützbeins (8) angebrachte Abwinklung (10) gebildet ist, wobei die Abwinklung (10) senkrecht zum Tunnel (5) in einer zum Boden (7) parallelen Ebene ausgerichtet ist.

6. Rahmen (3) nach einem der Ansprüche 1 bis 5, **dadurch gekennzeichnet, dass** das Stützbein (8) mindestens eine Verstärkungsreliefe (11) aufweist, die im Wesentlichen entlang der Haupterstreckung des Stützbeines (8) zwischen seinen Enden (8a, 8b) ausgebildet ist.

7. Fahrgestell (3) nach einem der Ansprüche 1 bis 6, **dadurch gekennzeichnet, dass** das Federbein (8) als Tiefziehprofil ausgebildet ist.

8. Fahrgestell (3) nach einem der Ansprüche 1 bis 7, **dadurch gekennzeichnet, dass** der Querträger (6) ein Sitzquerträger zur Abstützung mindestens eines an dem Querträger (6) befestigten Fahrzeugsitzes (1) ist.

9. Fahrgestell (3) nach Anspruch 8, **dadurch gekennzeichnet, dass** der Querträger (6) ein vorderer Sitzquerträger zur Abstützung mindestens eines vorderen Sitzes des Fahrzeugs (1) ist.

## Claims

1. Chassis (3) of a motor vehicle (1), comprising a base frame covered by a floor (7) fixed to the frame, the frame comprising lateral side members (4), at least one longitudinal tunnel (5) placed at a transverse distance from said side member (4) to which the tunnel (5) is connected via a cross member (6) fixed at one of its ends (6a) to the tunnel (5) and at the other of its ends (6b) to the side member (4), the cross member (6) forming a first member for transmitting to the tunnel (5) a first thrust force (EP1) generated by an impact (C1) applied laterally against the chassis (3), at least one strut (8) being jointly fixed at its respective ends (8a, 8b) to the cross-member (6) and to the tunnel (5), being inclined with respect to their main direction of extension in a plane parallel to the floor (7), said strut (8) forming a second member for transmitting to the tunnel (5) a second thrust force (EP2) generated by said impact (C1) and transmitted to the strut (8) by the cross-member (6), **characterized in that** said strut (8) comprises a return member (9) from the second thrust force (EP 2) from a first direction (D 1) of transmission of the second thrust force (EP 2) by the crosspiece (6) to the strut (8) which is oriented according to the main extension of the strut (8) between its ends (8 a, 8 b), to a second direction (D 2) of transmission of the second thrust force (EP 2) by the strut (8) to the tunnel (5) which is oriented perpendicularly to the tunnel (5).

2. Chassis (3) according to claim 1, **characterized in that** the chassis (3) comprises a triangulated structure (ST1) composed of:
- the support leg (8),
- the part of the cross-member (6) extending between its junction zone (Z 1) with the strut (8) and its end (6 a) joined to the tunnel (5), and
- the part of the tunnel (5) extending between the end (6a) of the cross-member (6) via which the cross-member (6) is fixed to the tunnel (5), and one end (8a) of the strut (8) fixed to the tunnel (5) and which is opposite its other end (8b) fixed to the cross-member (6).

3. Chassis (3) according to either of claims 1 and 2, **characterized in that**, in a plane parallel to the floor (7), the strut (8) is inclined relative to the cross-member (6) by a first angle (A1) of between 30° and 60° and relative to the tunnel (5) by a second angle (A2) of between 100° and 130°.

4. Chassis (3) according to any one of claims 1 to 3, **characterized in that**, in a plane parallel to the floor (7), the strut (8) is single, being inclined from the cross-member (6) towards the rear (AR1) of the chassis (3).

5. Chassis (3) according to one of claims 1 to 4, **characterized in that** the return member (9) is formed by an elbow (10) formed at the end of the support leg (8) which is fixed to the tunnel (5), the elbow (10) being oriented perpendicularly to the tunnel (5) in a plane parallel to the floor (7).

6. Chassis (3) according to any one of claims 1 to 5, **characterized in that** the strut (8) comprises at least one reinforcing relief (11) essentially formed along the main extension of the strut (8) between its ends (8a, 8b).

7. Frame (3) according to any one of claims 1 to 6, **characterized in that** the strut (8) is configured as a profile shaped by drawing.

8. Chassis (3) according to any one of claims 1 to 7, **characterized in that** the cross-member (6) is a sitting cross-member dedicated to supporting at least one seat of the vehicle (1) fixed to the cross-member (6).

9. Chassis (3) according to claim 8, **characterized in that** the cross-member (6) is a front seat cross-member dedicated to supporting at least one front seat of the vehicle (1).
